# FASCICULE DE BREVET EUROPEEN

(11) **EP 1 442 280 B1**
(45) Date de publication et mention de la délivrance du brevet: **22.07.2009**
(21) Numéro de dépôt: 02783195.7
(22) Date de dépôt: 23.09.2002
(51) Int. Cl.: G01N 1/22, G01N 33/28, E21B 21/06, E21B 49/00

(54) **MODULE D'EXTRACTION DE GAZ D'UN LIQUIDE DE SOUS-SOL ET INSTALLATION MUNIE DU MODULE**
MODUL ZUR EXTRAKTION EINES GASES AUS UNTERGRUNDFLUSSIGKEIT UND ANLAGE MIT EINEM SOLCHEN MODUL AUSGESTATTET
MODULE FOR EXTRACTING GAS FROM UNDERGROUND LIQUID AND INSTALLATION EQUIPPED THEREWITH

(30) Priorité: 25.09.2001 FR 0112334
(43) Date de publication de la demande: 04.08.2004
(73) Titulaire: Geoservices Equipements, 93150 Le Blanc-Mesnil (FR)
(72) Inventeur: BREVIERE, Jérôme, F-95150 Taverny (FR); EVRARD, Jean-François, F-93100 Montreuil-sous-Bois (FR)
(74) Mandataire: Jacobson, Claude
(86) Numéro de dépôt international: PCT/FR2002/003243
(87) Numéro de publication internationale: WO 2003/027641

(56) Documents cités:
- EP-A- 0 370 548
- EP-A- 0 555 965
- FR-A- 2 799 790
- US-A- 2 341 169
- US-A- 5 090 256

## Description

L'invention concerne un module d'extraction d'échantillons, en phase gazeuse, de composés présents dans un liquide d'exploitation d'un sous-sol. L'invention concerne également une installation d'analyse d'échantillons de gaz comportant un tel module d'extraction.

Le document US-A-5 090 256 prévoit une installation de ce genre, dans laquelle le module d'extraction reçoit un liquide de forage d'une pompe alimentée par une tête de prélèvement de liquide. Le module d'extraction agite le liquide pour libérer les gaz se trouvant dans celui-ci. Les gaz libérés sont collectés à partir du module d'extraction pour être ensuite analysés dans un dispositif en aval.

Ce module d'extraction présente l'inconvénient de ne pouvoir extraire qu'une partie des gaz contenus dans le liquide et en particulier ne permet pas l'extraction d'hydrocarbures lourds d'ordre C5 à C8.

Le document FR-A-2 799 790 prévoit quant à lui un récipient d'extraction de gaz à partir du liquide amené par une pompe et évacué par une ligne de refoulement. Une conduite relie le récipient à des moyens d'analyse et de mesure de gaz extraits, tandis qu'une entrée d'un gaz, air ou gaz inerte dans le récipient permet de régler le débit d'entrée de gaz.

Ce récipient d'extraction de gaz et l'installation dans laquelle il est prévu présentent également un certain nombre d'inconvénients.

En pratique, l'entrée de gaz se bouche souvent, contrairement à l'effet recherché.

Il est nécessaire de faire circuler un grand volume de liquide dans le récipient pour en extraire la quantité de gaz permettant l'analyse.

Enfin, le grand volume de liquide dans le récipient nécessite des moyens de chauffage apportant beaucoup de chaleur et consommant en conséquence beaucoup d'énergie, alors que peu d'énergie électrique est disponible à proximité du module d'extraction.

L'invention vise à obtenir un module d'extraction ainsi qu'une installation comportant le module d'extraction, palliant les inconvénients de l'état de la technique.

A cet effet, un premier objet de l'invention est un module d'extraction d'échantillons, en phase gazeuse, de composés présents dans un liquide d'exploitation d'un sous-sol, le module comportant :
- un récipient pour ledit liquide, associé à des moyens d'agitation du liquide dans le récipient en vue de l'extraction de composés en phase gazeuse du liquide, et,
reliés au récipient, lorsqu'il est en fonctionnement d'extraction de gaz :
- au moins un conduit d'entrée pour le liquide dans le récipient,
- au moins un conduit d'évacuation pour le liquide du récipient,
- au moins un conduit d'admission d'un gaz auxiliaire dans le récipient,
- au moins un conduit de sortie de gaz auxiliaire et de gaz extraits du liquide, destiné à être relié à un moyen de réception de gaz,
caractérisé en ce que le conduit d'admission de gaz auxiliaire et le conduit d'évacuation de liquide comportent un tronçon commun pour le passage du liquide et du gaz auxiliaire, des moyens pour empêcher du gaz auxiliaire de passer étant prévus sur le conduit d'évacuation de liquide en aval dudit tronçon commun dans le sens du passage du liquide.

Grâce à l'invention, le rendement d'extraction de gaz à partir du volume de liquide contenu dans le récipient est augmenté, tant du point de vue quantitatif que qualitatif. Ainsi, on parvient à extraire du liquide des composés hydrocarbonés gazeux ou liquides allant du méthane à l'octane, incluant les composés aromatiques tels que les BTEX, ainsi que d'autres gaz tels que le sulfure d'hydrogène.

Les inventeurs ont de plus découvert qu'il pouvait exister un volume mort de gaz extraits du liquide, stagnant dans le récipient, dont seulement une petite quantité pouvait être prélevée pour l'envoi aux moyens d'analyse de gaz extraits. Grâce à l'invention, ce volume mort dans le récipient est diminué et il est donné au gaz auxiliaire une surface de contact importante avec le liquide, ce qui favorise l'extraction de gaz. L'augmentation du rendement d'extraction permet de dimensionner le module d'extraction de manière plus adaptée à la quantité de gaz nécessaire pour leur analyse et donc de réduire les dimensions du module d'extraction pour un volume de gaz analysé donné. De plus, il n'est plus besoin d'apporter autant de chaleur pour chauffer le liquide, du fait du volume plus petit de liquide à chauffer. Le module d'extraction et l'installation en sont rendus plus efficaces et moins coûteux.

Dans un mode de réalisation de l'invention, permettant de diminuer le colmatage et la sédimentation du conduit d'admission de gaz auxiliaire par les matériaux contenus dans le liquide, le tronçon commun communique avec le récipient par l'intermédiaire d'une fenêtre de passage de gaz auxiliaire et de liquide comportant au moins un bord compris sensiblement dans un plan sur sa partie inférieure. Bien entendu, cette fenêtre de passage peut être prévue sur tout conduit d'évacuation de liquide et est indépendante des autres caractéristiques.

Un mode de réalisation de l'invention, simple à mettre en oeuvre, prévoit que la fenêtre a un profil rectangulaire.

Afin d'éviter que le conduit d'admission de gaz auxiliaire ne soit maculé par du liquide, il est prévu, suivant un mode de réalisation de l'invention, que le conduit d'admission de gaz auxiliaire débouche dans le conduit d'évacuation de liquide en une partie de celui-ci située sensiblement à l'abri des projections de liquide venant du récipient.

Dans un mode de réalisation de l'invention, adapté à une agitation rotative du liquide, les moyens d'agitation comprennent un agitateur rotatif et le conduit d'admission de gaz auxiliaire débouche dans le conduit d'évacuation de liquide en une partie située plus en amont qu'en aval du sens de rotation de l'agitateur rotatif.

Dans un mode de réalisation de l'invention, le conduit d'admission de gaz auxiliaire débouche dans le conduit d'évacuation de liquide en une partie de celui-ci se trouvant à distance du récipient.

Dans un mode de réalisation de l'invention, favorisant la circulation du liquide dans le récipient, le conduit d'évacuation du liquide est incliné vers le bas par rapport au récipient.

Un mode de réalisation de l'invention prévoit que le conduit d'admission de gaz auxiliaire présente un tronçon de raccordement au conduit d'évacuation de liquide et un tronçon d'arrivée de gaz auxiliaire, raccordé au tronçon de raccordement et coudé par rapport à celui-ci suivant une direction ayant une composante parallèle à la direction d'extension du conduit d'évacuation de liquide à proximité du tronçon de raccordement, et que le tronçon de raccordement débouche dans le conduit d'évacuation de liquide par une section élargie par rapport à celle du tronçon d'arrivée, ce qui permet de piéger les éventuelles projections de liquide à l'écart du tronçon d'arrivée de gaz.

Dans un mode de réalisation de l'invention, le tronçon d'arrivée de gaz auxiliaire est dirigé, dans le sens d'arrivée du gaz auxiliaire, dans le même sens que le sens d'évacuation du liquide dans le conduit d'évacuation de liquide, à proximité du tronçon de raccordement.

Dans un mode de réalisation de l'invention, permettant d'obtenir un module d'extraction tenant peu de place, le conduit d'admission de gaz auxiliaire forme un prolongement supérieur d'un tronçon rectiligne inférieur de conduit formant le conduit d'évacuation de liquide, le conduit d'admission de gaz auxiliaire et le conduit d'évacuation de liquide étant adjacents au récipient et débouchant dans celui-ci part une fenêtre de passage commune, un déflecteur de liquide étant prévu au-dessus de la fenêtre de passage dans le conduit d'admission de gaz auxiliaire.

Afin de rendre plus compact le module d'extraction, le récipient, le conduit d'admission de gaz auxiliaire, le conduit d'évacuation de liquide et le conduit d'entrée de liquide sont d'une seule pièce.

Un mode de réalisation de l'invention, simple à mettre en oeuvre, prévoit que les moyens pour empêcher du gaz auxiliaire de passer dans le conduit d'évacuation de liquide en aval du tronçon commun dans le sens de passage du liquide comportent un siphon dans le conduit d'évacuation de liquide.

Afin que le siphon tienne peu de place, celui-ci est réalisé, dans un mode de réalisation de l'invention, sous la partie du conduit d'évacuation de liquide raccordée au récipient.

Afin de pouvoir le cas échéant nettoyer, inspecter ou voir une partie du conduit d'évacuation de liquide, il est prévu, dans un mode de réalisation de l'invention, que le conduit d'évacuation de liquide comporte un passage avec l'extérieur au-dessus du niveau du siphon et en aval de celui-ci dans le sens de passage du liquide.

Un mode de réalisation de l'invention, facilitant la collecte des gaz extraits vers le moyen de réception de gaz, prévoit que le récipient comporte un corps surmonté par une collerette amovible, sur laquelle est prévu le conduit de sortie de gaz. Bien entendu, cette caractéristique peut être prévue dans tout module d'extraction d'échantillons, en phase gazeuse, de composés présents dans un liquide d'exploitation d'un sous-sol, et est indépendante des autres caractéristiques.

Afin de faire retomber du liquide ou de l'eau dans le récipient, un mode de réalisation prévoit que le conduit de sortie de gaz débouche dans la partie intérieure de collerette en contact avec l'intérieur du corps du récipient, en faisant un angle incliné vers l'intérieur du corps du récipient. Bien entendu, cette caractéristique peut être prévue dans tout module d'extraction d'échantillons, en phase gazeuse, de composés présents dans un liquide d'exploitation d'un sous-sol, et est indépendante des autres caractéristiques.

Un mode de réalisation de l'invention prévoit que le conduit de sortie de gaz comporte un premier tronçon de raccordement à la collerette, prolongé, du coté de sortie des gaz, par un tronçon de section intérieure plus petite que celle du tronçon de raccordement, afin de diminuer les risques de passage du liquide d'exploitation de sous-sol vers le module d'analyse et de détecter le bouchage du conduit de sortie. Bien entendu, cette caractéristique peut être prévue dans tout module d'extraction d'échantillons, en phase gazeuse, de composés présents dans un liquide d'exploitation d'un sous-sol et est indépendante des autres caractéristiques.

Un deuxième objet de l'invention est une installation d'analyse d'échantillons de gaz comportant un module d'extraction tel que décrit ci-dessus, dont le conduit d'entrée de liquide est raccordé à un module de prélèvement de liquide d'exploitation d'un sous-sol et dont le conduit de sortie de gaz est raccordé à un module d'analyse d'échantillons de gaz.

Un mode de réalisation de l'invention, nécessitant peu de dépenses, prévoit que le conduit d'admission de gaz auxiliaire est mis à l'atmosphère, le module d'analyse d'échantillons de gaz comportant des moyens d'aspiration de gaz.

Un autre mode de réalisation de l'invention, permettant de pousser les gaz extraits vers le conduit de sortie de gaz, prévoit que le conduit d'admission de gaz auxiliaire est relié à une source de gaz auxiliaire comprimé.

Pour un chauffage plus efficace du liquide contenu dans le récipient, un mode de réalisation de l'invention, pouvant être prévu dans toute installation d'analyse d'échantillons de gaz et indépendant des autres caractéristiques, prévoit un module de réchauffage de liquide, qui est interposé dans le circuit de liquide entre le module de prélèvement de liquide et le module d'extraction, à l'extérieur du module d'extraction.

Afin de diminuer les risques que de l'eau n'arrive au module d'analyse d'échantillons de gaz, il est prévu, dans un mode de réalisation de l'invention pouvant être prévu dans toute installation d'échantillons de gaz et indépendant des autres caractéristiques, que le conduit de sortie de gaz est relié au module d'analyse d'échantillons de gaz par l'intermédiaire d'un module de piégeage d'eau.

Un mode de réalisation de l'invention prévoit que la collerette est reliée de manière étanche au corps de récipient par l'intermédiaire d'une platine de support du module extraction, laquelle comporte un passage entre l'intérieur du corps du récipient et l'intérieur de la collerette.

Suivant un mode de réalisation de l'invention, le module de piégeage d'eau est muni de moyens de maintien de la température à une valeur prédéterminée.

Un mode de réalisation de l'invention prévoit que le module d'analyse est relié au module de piégeage d'eau par l'intermédiaire d'un conduit de gaz comportant un premier tronçon de raccordement au module de piégeage d'eau, prolongé, du côté de sortie des gaz, par un deuxième tronçon de section intérieure plus petite que celle du premier tronçon de raccordement. Grâce à ce mode de réalisation, on diminue les risques de passage du liquide d'exploitation de sous-sol vers le module d'analyse et on détecter le bouchage du conduit de sortie de gaz.

L'invention sera mieux comprise à la lecture de la description qui va suivre, faite en référence aux dessins annexés, donnés uniquement à titre d'exemples non limitatifs et sur lesquels :
- la figure 1 représente schématiquement une installation d'analyse d'échantillons de gaz suivant l'invention ;
- la figure 2 représente schématiquement, en coupe transversale verticale, un premier mode de réalisation du module d'extraction suivant l'invention ;
- la figure 3 représente schématiquement, en vue de dessus, le module d'extraction selon la figure 2 ;
- la figure 4 représente schématiquement une partie intérieure du module d'extraction suivant les figures 2 et 3, comportant une fenêtre de passage ;
- la figure 5 représente schématiquement, en coupe transversale verticale, un deuxième mode de réalisation du module d'extraction suivant l'invention ;
- la figure 6 représente schématiquement, en coupe transversale verticale, un troisième mode de réalisation du module d'extraction suivant l'invention ;
- la figure 7 représente schématiquement, en coupe transversale verticale, un quatrième mode de réalisation du module d'extraction suivant l'invention ; et
- la figure 8 représente schématiquement, en coupe transversale verticale, une collerette faisant partie du module d'extraction suivant l'invention.

L'invention est décrite ci-après en référence à une installation de prélèvement de liquide remonté lors d'un forage dans un puits de pétrole, constituant dans ce cas le liquide d'exploitation de sous-sol, également appelé fluide d'exploitation de sous-sol. Du liquide sous forme de boue est envoyé au fond du puits puis remonté par pompage, ainsi que cela est connu de l'homme du métier. Le liquide remonté est chargé de gaz et autres substances, présents dans le puits, qu'il faut extraire du liquide remonté afin d'obtenir des informations sur les couches de terrain traversées par le forage, leur composition, leur richesse et leur composition en hydrocarbures, ainsi que sur les conditions de forage. Bien entendu, le liquide d'exploitation de sous-sol peut également être tout autre liquide, tel que par exemple de l'eau ou du pétrole, remonté d'un sous-sol.

L'installation d'extraction suivant l'invention comporte un module 1 de prélèvement de liquide du puits de forage, comportant par exemple une motopompe non représentée permettant d'aspirer du liquide issu du puits par l'intermédiaire d'une tête 2 de prélèvement de liquide ou crépine enfoncée dans le puits et d'une tubulure 3 de raccordement au module 1 de prélèvement. Le module 1 de prélèvement envoie le liquide prélevé du puits dans une tubulure 4 de sortie relié à l'entrée 5 d'un module 6 de réchauffage du liquide. Le module de prélèvement 1 est constitué d'un châssis équipé d'un moteur et d'un réducteur à deux sorties entraînant d'une part une pompe péristaltique prélevant par la tubulure 3 et la tête 2 du liquide issu du puits à un débit compris entre 0,15 et 0,5 litre par minute et le délivrant à la tubulure 4, et d'autre part un câble Bowden relié à la crépine 2 et entrainant un racleur rotatif de celle-ci, afin d'éviter qu'elle se bouche, ainsi que décrit dans le brevet US-A-5 090 256.

Le module 6 de réchauffage du liquide comporte par exemple une résistance thermique de chauffage à alimentation électrique non représentée. L'entrée 5 de liquide du module 6 se trouve sur la partie inférieure de celui-ci, tandis que la sortie 7 de liquide du module 6 se trouve à sa partie supérieure. Le module 6 a par exemple une puissance comprise entre 1 et 3 kW permettant au liquide le traversant de son entrée 5 à sa sortie 7 d'être porté à une température choisie comprise par exemple entre 25 et 120°C, et, typiquement entre 60 et 90°C. Le volume utile du module 6 est compris par exemple entre 0,5 et 2,5 litres. La sortie 7 de liquide du module 6 est reliée par l'intermédiaire d'une tubulure 8 au conduit 9 d'entrée de liquide du module 10 d'extraction d'échantillons de gaz suivant l'invention. Le module 6 de réchauffage est séparé du module 10 d'extraction. Ce module 10 comporte un conduit 11 de sortie de gaz relié par l'intermédiaire d'une tubulure 12 de sortie de gaz à un accès 13 d'entrée d'un module 14 d'analyse d'échantillons de gaz.

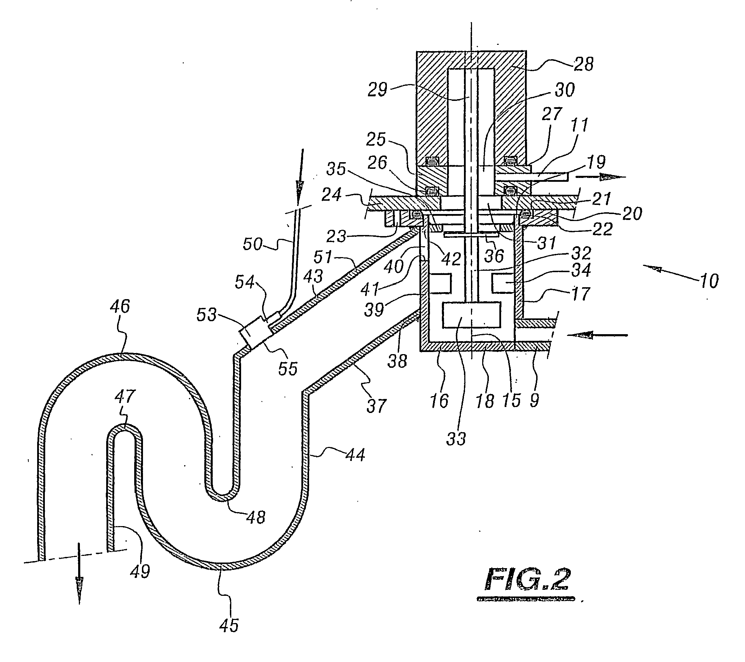

A la figure 2, le module 10 d'extraction suivant l'invention comporte un récipient 16, par exemple ayant un corps de forme cylindrique circulaire autour d'un axe 15 de révolution. Bien entendu, toute autre forme géométrique du corps du récipient 16 peut être prévue. Dans ce qui suit, l'axe 15 de révolution du récipient 16 est supposé vertical. Le conduit 9 d'entrée de liquide débouche dans le récipient 16 dans la partie inférieure de celui-ci, par exemple, ainsi que représenté, dans le bas de la surface latérale 17 cylindrique du récipient 16. Dans des réalisations non représentées, le conduit 9 d'entrée de liquide débouche dans le fond 18 du récipient 16. Du côté éloigné du fond 18, la surface latérale 17 du récipient 16 comporte un bord circulaire 19 fixé à une rondelle 20 périphérique présentant une gorge intérieure 21 à proximité du bord 19 pour le logement d'un joint 22 torique d'étanchéité. Des moyens 23 par exemple à vis et écrous ou autres sont prévus sur la rondelle 23 pour la fixer sur une platine 24 de support du récipient 16. Le bord 19 est maintenu face à la platine 24 de support de manière étanche grâce au joint 22.

Du côté de la platine 24 de support, éloigné du bord 19, est prévue une collerette 25 amovible maintenue par tout moyen approprié contre la platine 24 et ce de manière étanche par l'intermédiaire d'un joint 26 torique d'étanchéité. La collerette 25 comporte une surface supérieure 27 sur laquelle est fixé un moteur 28 électrique dont le rotor central 29 traverse des évidements centraux 30, 31 permettant le passage des gaz et prévus respectivement à l'intérieur de la collerette 25 et de la platine 24 de support. Le conduit 11 de sortie de gaz communique avec l'évidement 30 intérieur de la collerette 25. L'arbre 29 est relié dans le récipient 16 à un agitateur rotatif 32 formé par exemple d'une tige prolongeant l'arbre 29 et à laquelle sont fixées une ou plusieurs pales 33 plongeant dans le récipient 16. L'arbre 29 et la tige de l'agitateur sont par exemple dirigés suivant l'axe 15 du récipient 16 et les pales 33 sont par exemple radiales par rapport à cet axe 15 et au nombre de quatre, ou deux ainsi que représenté. Un ou plusieurs déflecteurs 34 de liquide, par exemple prévus sous forme de plaques verticales, sont fixés à l'intérieur de la surface latérale 17 au-dessus du niveau des pales 33, pour créer une turbulence dans le récipient 16, due à la rotation du liquide dans celui-ci. Une rondelle 35 est fixée à l'intérieur de la surface latérale 17 à proximité du bord 19 pour protéger le dessus du récipient 16 contre les projections de liquide dues à l'agitation. Une rondelle de protection 36 est également fixée à l'arbre 29 légèrement en dessous de la rondelle 35, la rondelle 36 de protection ayant un diamètre extérieur inférieur au diamètre intérieur de la rondelle 35 pour permettre l'insertion de l'arbre 29 dans le récipient 16. Bien entendu, la rondelle 36 de protection pourrait également être située au même niveau ou au-dessus de la rondelle 35.

Un conduit extérieur 37 d'évacuation de liquide du récipient 16 est fixé à la surface latérale 17 du récipient 16 par une partie 38 de liaison entre ceux-ci. La partie de liaison 38 délimite une partie 39 de la surface latérale 17 dans laquelle est prévue une fenêtre 40 permettant le passage du liquide et des gaz. La fenêtre 40 est prévue au-dessus des pales 33 de l'agitateur 32 et des déflecteurs 34 et en dessous de la rondelle 35 intérieure. La fenêtre 40 de passage comporte un bord inférieur 41 et un bord supérieur 42. Le bord inférieur 41 se trouve à distance de la partie 38 de liaison.

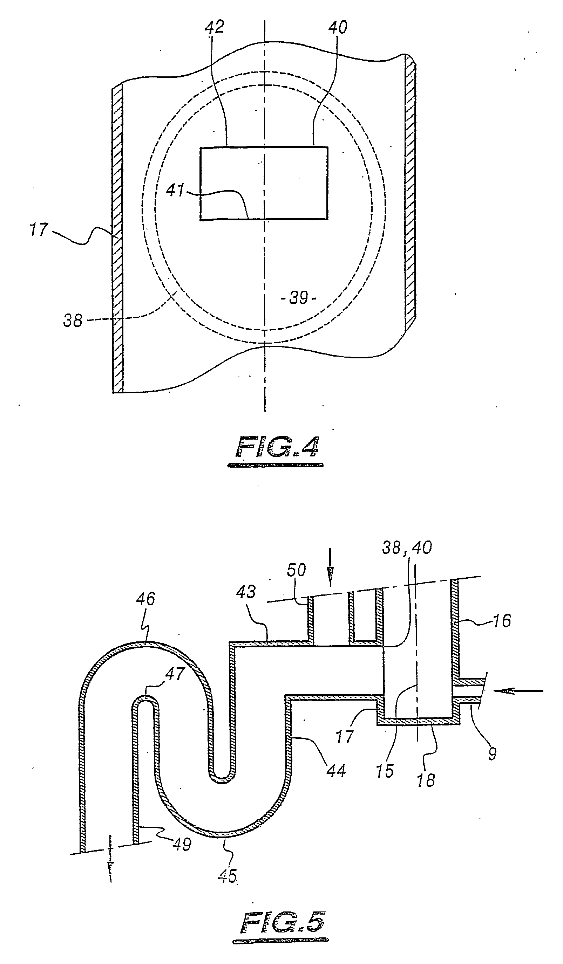

Ainsi que représenté à la figure 4, le bord 41 inférieur est compris dans un plan perpendiculaire à l'axe 15 de révolution de la surface latérale cylindrique 17 du récipient 16, de même que le bord supérieur 42. La fenêtre est par exemple rectangulaire. Dans des réalisations non représentées, le bord inférieur 41 et/ou le bord supérieur 42 ont seulement une partie comprise dans un tel plan. L'agitateur 32 est commandé de manière à faire monter le liquide au-dessus du bord inférieur 41 et à faire passer le liquide dans le conduit 37. La partie plane du bord inférieur 41, ou la totalité de celui-ci lorsqu'il est plan ainsi que représenté, évite dans une large mesure que la fenêtre 40 soit bouchée par le liquide. La fenêtre 40 a par exemple une section de passage comprise entre 1 et 6 cm².

Le conduit 37 extérieur d'évacuation de liquide comporte un tronçon rectiligne 43 de sortie de liquide du récipient 16, raccordé d'une part à la partie 38 de liaison et d'autre part à un tronçon 44 vertical de raccordement et de prolongement vers le bas. Le tronçon 43 de sortie de liquide est incliné vers le bas, par exemple d'un angle compris entre 25 et 45 degrés par rapport à l'axe 15. Le tronçon 44 de prolongement est relié vers le bas à un tronçon 45 doublement coudé, en S, et comportant un premier coude 45 vers le haut et un deuxième coude 46 vers le bas. La partie inférieure 47 du deuxième coude 46 vers le bas se trouve à un niveau supérieur à la partie supérieure 48 du premier coude 45 vers le haut, réalisant ainsi un siphon pour le liquide. La partie inférieure 47 du deuxième coude se trouve également au-dessous du tronçon 43 de sortie de liquide. Le deuxième coude 46 vers le bas est relié en partie inférieure à un tronçon 49 d'évacuation de liquide vers l'extérieur, par exemple par gravité dans un bac de rejet ou autre, non représenté. Ainsi, lorsque du liquide remplit le premier coude 45 vers le haut au-dessus de la partie supérieure 48 de ce premier coude 45, du gaz provenant du tronçon 44 de prolongement est empêché de passer vers le deuxième coude 46 vers le bas, et du gaz provenant le cas échéant du tronçon 49 d'évacuation de liquide est empêché de passer vers le tronçon 44 de prolongement. Les tronçons 43, 44, 49 et les coudes 45, 46 sont par exemple cylindrique circulaires. Bien entendu, tout autre moyen pour rendre étanches aux gaz les tronçons raccordés au tronçon 44 de prolongement peut être prévu.

Un conduit 50 d'introduction d'un gaz auxiliaire est raccordé au tronçon 43 de sortie de liquide du récipient 16, entre le tronçon 44 de prolongement et la partie 38 de liaison au récipient 16. Le gaz auxiliaire peut être de l'air, ou tout gaz inerte, tel que par exemple de l'azote.

Le dimensionnement du module 10 d'extraction est par exemple le suivant. Le tronçon 43 de sortie de liquide a un diamètre compris entre 15 et 55 millimètres et une longueur comprise entre 50 et 150 millimètres. Le volume du récipient 16 est compris entre 40 et 300 cm³ et le liquide arrive au conduit 9 d'entrée de liquide à un débit compris entre 0,15 et 0,5 litre par minute. La vitesse de rotation de l'agitateur est comprise ente 1500 et 3500 tours par minute. Le conduit 50 d'admission de gaz auxiliaire a par exemple un diamètre compris entre 2 et 6 millimètres, est à une distance comprise entre 40 et 140 millimètres de la partie 38 de liaison et possède un angle d'inclinaison compris entre 30 et 50° par rapport à l'axe 15 du récipient 16.

Lorsque l'agitateur 32 est mis en marche, le liquide introduit par le conduit 9 d'entrée est agité dans le récipient 16 et envoyé dans le conduit 37 d'évacuation de liquide en passant par la fenêtre 40. Le liquide envoyé dans le conduit 37 d'évacuation de liquide descend le tronçon 43 de sortie de liquide, puis le tronçon 44 de prolongement, le premier coude 45 et, lorsque son niveau dépasse la partie inférieure 47 du deuxième coude 46, le tronçon 49 d'évacuation de liquide. Grâce à l'agitation du liquide dans le récipient 16, du gaz est extrait du liquide. Le gaz auxiliaire introduit par le conduit 50 d'introduction est empêché de sortir du tronçon 44 de prolongement du fait des moyens d'étanchéité au gaz prévus en aval de celui-ci et est envoyé dans le tronçon 43 de sortie de liquide, la fenêtre 40, l'intérieur du récipient 16 et de la rondelle 35, l'évidement 31, l'évidement 30 pour sortir par le conduit 11 de sortie. Ainsi, le gaz auxiliaire permet de transporter le ou les gaz extraits du liquide. A la figure 2, un conduit d'admission du gaz auxiliaire dans le récipient 16 est formé par le conduit 50 d'introduction de gaz auxiliaire et par la partie du tronçon 43 de sortie de liquide, comprise entre l'embouchure du conduit 50 d'introduction de gaz auxiliaire dans le conduit 43 de sortie de liquide et la partie 38 de liaison. Il existe un tronçon commun 51, formé à la figure 2 par la partie du tronçon 43 de sortie de liquide, comprise entre la partie de liaison 38 et l'embouchure du conduit 50 d'introduction de gaz auxiliaire dans le conduit 43 de sortie de liquide, dans lequel du liquide passe dans un sens et du gaz auxiliaire passe dans l'autre, ce qui favorise également l'extraction de gaz du liquide. Ainsi, le circuit de circulation de gaz auxiliaire et le circuit de circulation de liquide présentent un tronçon commun à l'extérieur du récipient 16. Le conduit 50 d'introduction de gaz auxiliaire est raccordé à une source de gaz auxiliaire comprimé pour passer les gaz extraits du liquide vers le conduit 11 de sortie de gaz. En variante, le conduit 50 d'introduction de gaz auxiliaire est mis à l'atmosphère et le module 14 d'analyse d'échantillons de gaz comporte une pompe ou autre pour aspirer le gaz auxiliaire et des gaz extraits du liquide.

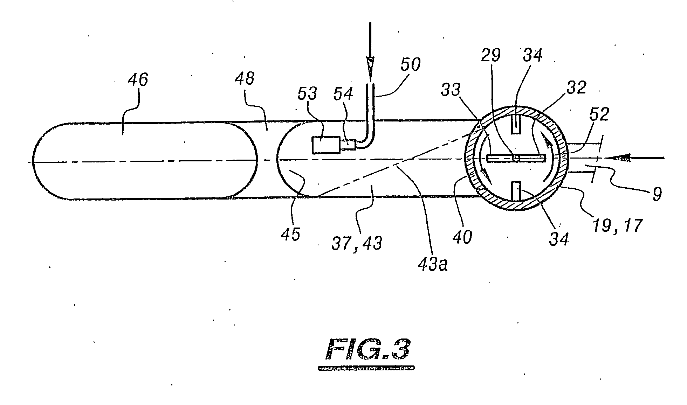

Aux figures 2 et 3, le conduit 50 d'introduction de gaz auxiliaire débouche dans le tronçon 43 de sortie de liquide en une partie inférieure de celui-ci, proche du tronçon 44 de raccordement. On voit à la figure 3 que le conduit 50 d'introduction de gaz auxiliaire débouche dans le tronçon 43 de sortie de liquide en une partie de celui-ci située plus en amont qu'en aval dans le sens 52 de rotation des pales 33 de l'agitateur 32. Le conduit 50 d'introduction de gaz auxiliaire comporte un tronçon 53 de raccordement au tronçon 43 de sortie de liquide et un tronçon 54 d'arrivée de gaz auxiliaire raccordé à ce tronçon 53. Le tronçon 54 est coudé par rapport au tronçon 53 parallèlement à la direction d'extension du conduit 43 de sortie de liquide et vers le haut, de manière que le gaz auxiliaire arrive dans le tronçon 54 d'arrivée dans le même sens que le sens de circulation du liquide dans le tronçon 43 de sortie de liquide. La section 55 de passage pour le gaz auxiliaire du tronçon 53 de raccordement est supérieure à celle du tronçon 54 d'arrivée. Cette disposition permet de mettre à l'abri le tronçon 54 des éventuelles projections de liquide présentes dans le tronçon 43 de sortie de liquide à droite de la ligne fantôme 43a qui représente la trajectoire limite de ces projections.

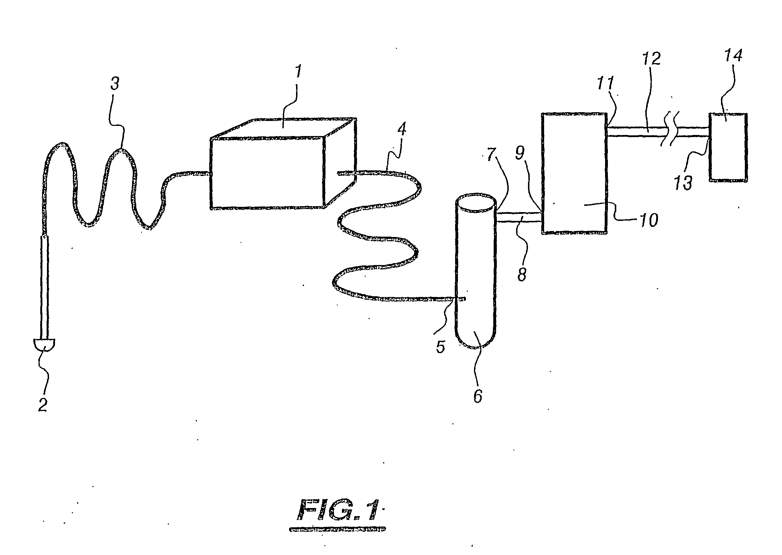

Aux figures 5, 6 et 7, l'agitateur 32, le rotor 29 et les parties situées au-dessus du récipient 16 n'ont pas été représentés, dans un souci de clarté. Il va de soi que ces parties sont également présentes pour le fonctionnement du module d'extraction. Il est décrit ci-dessous les parties se différenciant des figures 1 à 4.

Dans le mode de réalisation représenté à la figure 5, le tronçon 43 de sortie de liquide est sensiblement horizontal et débouche entièrement d'une part dans la surface latérale 17 du récipient 16 et d'autre part dans le tronçon 44 de raccordement. Le conduit 50 d'introduction de gaz auxiliaire débouche dans le tronçon 43 de sortie de liquide, sur une partie supérieure de celui-ci, entre le tronçon 44 de raccordement et la partie 38 de liaison au récipient 16. La fenêtre 40 de passage est par exemple formée par la partie 38 de liaison.

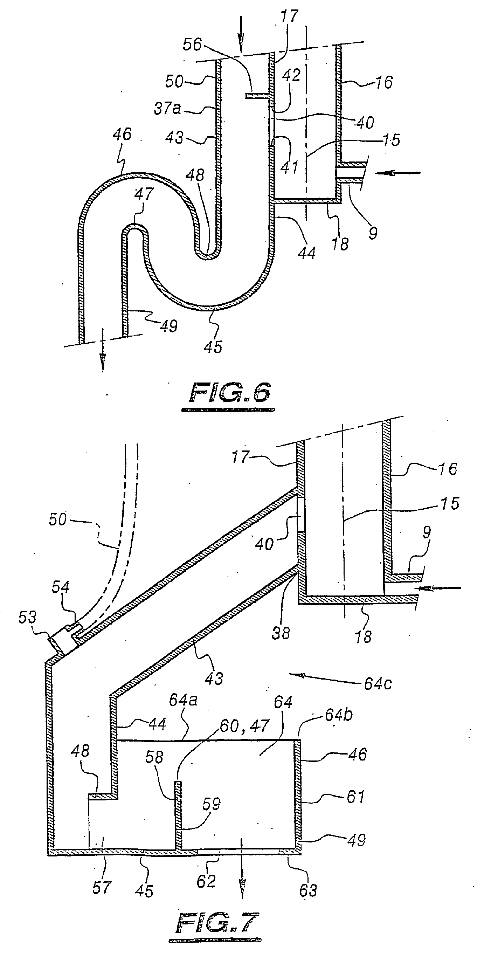

Dans le mode de réalisation représenté à la figure 6, un conduit 37a est adjacent à la surface latérale 17 du récipient 16, est vertical et communique avec l'intérieur du récipient 16 par la fenêtre 40 de passage. La partie du conduit 37a située sous le bord supérieur 42 de la fenêtre 40 forme le tronçon 43 de sortie de liquide du récipient 16 ainsi que le tronçon 44 de raccordement, tandis que la partie du conduit 37a située au-dessus du bord inférieur 41 de la fenêtre 40 forme le conduit 50 d'introduction et d'admission de gaz auxiliaire. Un déflecteur 56 est prévu dans le conduit 37a, au-dessus et à proximité du bord supérieur 42 de la fenêtre 40, pour dévier vers le bas d'éventuelles projections de liquide issues du récipient 16. Le tronçon commun entre le conduit de sortie de liquide et le conduit 50 d'admission de gaz auxiliaire est formé par la partie du conduit 37a, adjacente à la fenêtre 40 de passage.

Dans le mode de réalisation représenté à la figure 7, le conduit 50 d'introduction de gaz auxiliaire, le tronçon 43 de sortie de liquide, le tronçon 44 de raccordement et le récipient 16 sont analogues aux modes de réalisation représentés aux figures 2 à 4. Le premier coude 45 comporte un tronçon rectiligne 57, formant la partie supérieure 48 du premier coude 45 vers le haut, et raccordé d'une part à angle droit au tronçon 44 de raccordement et d'autre part à angle droit à un tronçon 58 de sortie vers le haut du liquide, comportant une paroi 59 verticale fixée au tronçon 57 à distance du tronçon 44 de raccordement. Le bord supérieur 60 de la paroi 59 forme la partie inférieure 47 du deuxième coude 46. Une paroi 61 est raccordée à la paroi 59 pour former le tronçon 49 d'évacuation de liquide, une fenêtre 62 de sortie de liquide étant prévue dans la partie inférieure 63 de raccordement de la paroi 61 à la paroi 59. Le premier coude 45 et le deuxième coude 46 ainsi formés, la paroi 59 et la paroi 61 se trouvent sous le tronçon 43 de sortie de liquide, une partie de la paroi 61 étant alignée verticalement avec une génératrice de la partie 38 de liaison de la surface latérale 17 du récipient 16. La paroi 61 rejoint le tronçon de raccordement 44 par une paroi périphérique 64 entourant la paroi 59 et ayant un bord supérieur 64a plus haut que le bord 60. Le bord supérieur 64b de la paroi 61 se trouve à distance du fond 18 du récipient 16 ainsi que du tronçon 43 de sortie de liquide et délimite ainsi un passage 64c avec l'extérieur, permettant le cas échéant d'introduire un outil de nettoyage. De plus, ce mode de réalisation permet d'obtenir une structure compacte et monobloc du module d'extraction.

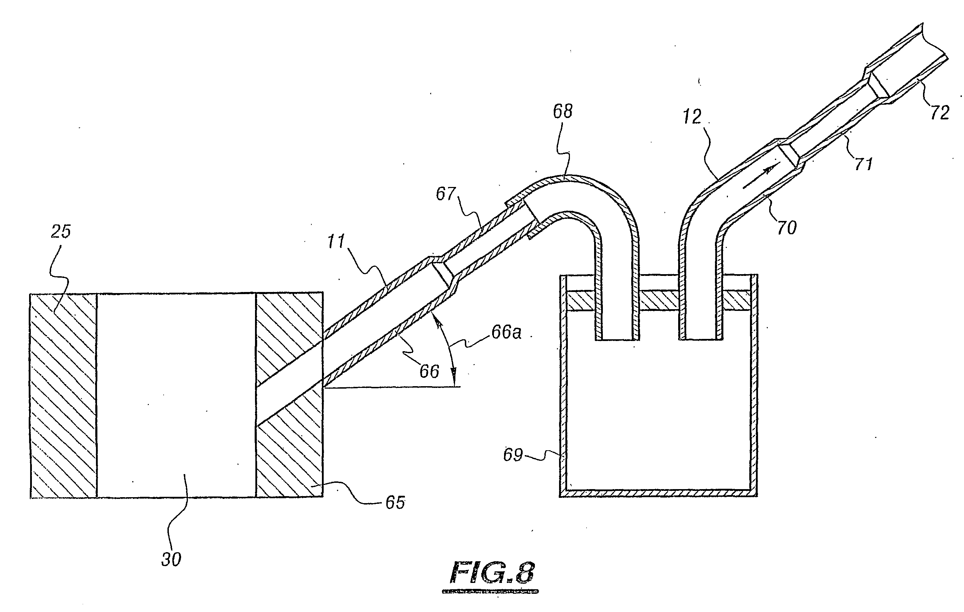

A la figure 8, le conduit 11 de sortie de gaz traverse la paroi latérale 65 de la collerette 25 et est prolongé vers l'extérieur en un tronçon 66 de raccordement à la collerette 25 et est incliné vers le haut d'un angle 66a déterminé. Le tronçon 66 de raccordement est par exemple cylindrique circulaire avec un diamètre compris entre 2 et 10 millimètres. Le tronçon 66 de raccordement est relié, à son extrémité éloignée de la collerette 25, à un tronçon 67 de section transversale intérieure inférieure à celle du tronçon 66 de raccordement. Une tubulure 68, de section transversale intérieure plus grande que celle du tronçon 67, est raccordée à et par exemple entoure l'extrémité libre du tronçon 67, et plonge dans un récipient 69 de piégeage de l'eau contenue dans les gaz entrant. Les gaz sortent du récipient 69 de piégeage d'eau par le conduit 12 de sortie de gaz relié au module 14 d'analyse de gaz. Le conduit 12 de gaz comporte un premier tronçon 70 de raccordement au module 69 de piégeage d'eau, le tronçon 70 étant prolongé, du côté de sortie des gaz, par un deuxième tronçon 71 de section intérieure plus petite que celle du tronçon 70 de raccordement, lui-même raccordé au module 14 d'analyse par l'intermédiaire d'un troisième tronçon 72 de conduit de gaz, de section supérieure à celle du tronçon 71.

L'invention permet ainsi d'extraire avec un bon rendement des gaz contenus dans le liquide introduit dans le module d'extraction, rendant particulièrement appropriée son utilisation pour l'analyse en continu des gaz remontés d'un puits de forage.

## Revendications

1. Module (10) d'extraction d'échantillons, en phase gazeuse, de composés présents dans un liquide d'exploitation d'un sous-sol, le module (10) d'extraction comportant :
- un récipient (16) pour ledit liquide, associé à des moyens (28, 29, 32, 33, 34) d'agitation du liquide dans le récipient (16) en vue de l'extraction de composés en phase gazeuse du liquide, et,
reliés au récipient (16), lorsqu'il est en fonctionnement d'extraction de gaz :
- au moins un conduit (9) d'entrée pour le liquide dans le récipient (16),
- au moins un conduit (37) d'évacuation pour le liquide du récipient (16),
- au moins un conduit (50, 43) d'admission d'un gaz auxiliaire dans le récipient (16),
- au moins un conduit (11) de sortie de gaz auxiliaire et de gaz extraits du liquide, destiné à être relié à un moyen (14) de réception de gaz,
**caractérisé en ce que** le conduit (50, 43) d'admission de gaz auxiliaire et le conduit (37) d'évacuation de liquide comportent au moins un tronçon (51) commun pour le passage du liquide et du gaz auxiliaire, des moyens (45-48) pour empêcher du gaz auxiliaire de passer étant prévus sur le conduit (37) d'évacuation de liquide, en aval dudit tronçon commun (51) dans le sens de passage du liquide.

2. Module (10) d'extraction suivant la revendication 1, **caractérisé en ce que** le tronçon (51) commun communique avec le récipient (16) par l'intermédiaire d'une fenêtre (40) de passage de gaz auxiliaire et de liquide comportant au moins un bord (41) compris sensiblement dans un plan sur sa partie inférieure.

3. Module (10) d'extraction suivant la revendication 2, **caractérisé en ce que** la fenêtre (40) de passage a un profil rectangulaire.

4. Module (10) d'extraction suivant l'une quelconque des revendications précédentes, **caractérisé en ce que** le conduit (50, 43) d'admission de gaz auxiliaire débouche dans le conduit (37) d'évacuation de liquide en une partie située sensiblement à l'abri des projections de liquide venant du récipient (16).

5. Module (10) d'extraction suivant la revendication 4, **caractérisé en ce que** les moyens (28, 29, 32, 33, 34) d'agitation comprennent un agitateur (32) rotatif et le conduit (50, 43) d'admission de gaz auxiliaire débouche dans le conduit (37) d'évacuation de liquide en une partie (53) située plus en amont qu'en aval du sens de rotation de l'agitateur (32) rotatif.

6. Module (10) d'extraction suivant l'une quelconque des revendications précédentes, **caractérisé en ce que** le conduit (50, 43) d'admission de gaz auxiliaire débouche dans le conduit (37) d'évacuation de liquide en une partie (53) se trouvant à distance du récipient (16).

7. Module (10) d'extraction suivant l'une quelconque des revendications précédentes, **caractérisé en ce que** le conduit (37) d'évacuation de liquide est incliné vers le bas par rapport au récipient (16).

8. Module (10) d'extraction suivant l'une quelconque des revendications précédentes, **caractérisé en ce que** le conduit (50, 43) d'admission de gaz auxiliaire présente un tronçon (53) de raccordement au conduit (37) d'évacuation de liquide et un tronçon (54) d'arrivée de gaz auxiliaire, raccordé au tronçon (53) de raccordement et coudé par rapport à celui-ci suivant une direction ayant une composante parallèle à la direction d'extension du conduit (37) d'évacuation de liquide à proximité du tronçon (53) de raccordement, et le tronçon (53) de raccordement débouche dans le conduit (37) d'évacuation de liquide par une section (55) élargie par rapport à celle du tronçon (54) d'arrivée.

9. Module (10) d'extraction suivant la revendication 8, **caractérisé en ce que** le tronçon (54) d'arrivée de gaz auxiliaire est dirigé, dans le sens d'arrivée du gaz auxiliaire, dans le même sens que le sens d'évacuation du liquide dans le conduit (37) d'évacuation de liquide, à proximité du tronçon (53) de raccordement.

10. Module (10) d'extraction suivant l'une quelconque des revendications précédentes, **caractérisé en ce que** le conduit (50) d'admission de gaz auxiliaire forme un prolongement supérieur d'un tronçon (43) rectiligne inférieur de conduit formant le conduit (37) d'évacuation de liquide, le conduit (50) d'admission de gaz auxiliaire et le conduit (37) d'évacuation de liquide étant adjacents au récipient (16) et débouchant dans celui-ci par une fenêtre (40) de passage commune, un déflecteur (56) de liquide étant prévu au-dessus de la fenêtre (40) de passage dans le conduit (50) d'admission de gaz auxiliaire.

11. Module (10) d'extraction suivant l'une quelconque des revendications précédentes, **caractérisé en ce que** le récipient (16), le conduit (50, 43) d'admission de gaz auxiliaire, le conduit (37) d'évacuation de liquide et le conduit (9) d'entrée de liquide sont d'une seule pièce.

12. Module (10) d'extraction suivant l'une quelconque des revendications précédentes, **caractérisé en ce que** les moyens (45-48) pour empêcher du gaz auxiliaire de passer dans le conduit (37) d'évacuation de liquide en aval du tronçon (51) commun dans le sens de passage de liquide, comportent un siphon dans le conduit (37) d'évacuation de liquide.

13. Module (10) d'extraction suivant la revendication 12, **caractérisé en ce que** le siphon est réalisé sous la partie (43) du conduit (37) de liquide raccordée au récipient (16).

14. Module (10) d'extraction suivant l'une quelconque des revendications 12 et 13, **caractérisé en ce que** le conduit (37) d'évacuation de liquide comporte un passage (64c) avec l'extérieur, au-dessus du niveau du siphon et en aval de celui-ci dans le sens de passage du liquide.

15. Module (10) d'extraction suivant l'une quelconque des revendications précédentes, **caractérisé en ce que** le récipient (16) comporte un corps (17, 18) surmonté par une collerette (25) amovible sur laquelle est prévu le conduit (11) de sortie de gaz.

16. Module (10) d'extraction suivant la revendication 15, **caractérisé en ce que** le conduit (11) de sortie de gaz débouche dans la partie intérieure (30) de la collerette (25) en contact avec l'intérieur du corps (17, 18) du récipient (16), en faisant un angle (66a) incliné vers l'intérieur du corps (17, 18) du récipient (16).

17. Module (10) d'extraction suivant l'une quelconque des revendications 15 et 16, **caractérisé en ce que** le conduit (11) de sortie de gaz comporte un premier tronçon (66) de raccordement à la collerette (25), prolongé, du côté de sortie des gaz, par un tronçon (67) de section intérieure plus petite que celle du tronçon (66) de raccordement.

18. Installation d'analyse d'échantillons de gaz, comportant un module (10) d'extraction suivant l'une quelconque des revendications précédentes, dont le conduit (9) d'entrée de liquide est raccordé à un module (1) de prélèvement de liquide d'exploitation d'un sous-sol et dont le conduit (11) de sortie de gaz est raccordé à un module (14) d'analyse d'échantillons de gaz.

19. Installation suivant la revendication 18, **caractérisée en ce que** le conduit (50, 43) d'admission de gaz auxiliaire est mis à l'atmosphère, le module (14) d'analyse d'échantillons de gaz comportant des moyens d'aspiration de gaz.

20. Installation suivant la revendication 18, **caractérisée en ce que** le conduit (50, 43) d'admission de gaz auxiliaire est relié à une source de gaz auxiliaire comprimé.

21. Installation suivant l'une quelconque des revendications 18 à 20, **caractérisée en ce qu'**un module (6) de réchauffage de liquide est interposé dans le circuit de liquide entre le module (1) de prélèvement de liquide et le module (10) d'extraction, à l'extérieur du module (10) d'extraction.

22. Installation suivant l'une quelconque des revendications 18 à 21, **caractérisée en ce que** le conduit (11) de sortie de gaz est relié au module (14) d'analyse d'échantillons de gaz par l'intermédiaire d'un module (69) de piégeage d'eau.

23. Installation suivant la revendication 22, **caractérisée en ce que** le module (69) de piégeage d'eau est muni de moyens de maintien de la température à une valeur prédéterminée.

24. Installation suivant la revendication 22 ou 23, **caractérisée en ce que** le module (14) d'analyse est relié au module (69) de piégeage d'eau par l'intermédiaire d'un conduit (12) de gaz comportant un premier tronçon (70) de raccordement au module (69) de piégeage d'eau, prolongé, du côté de sortie des gaz, par un deuxième tronçon (71) de section intérieure plus petite que celle du premier tronçon (70) de raccordement.

25. Installation suivant l'une quelconque des revendications 18 à 24, prise en combinaison avec l'une quelconque des revendications 15 à 17, **caractérisée en ce que** la collerette (25) est reliée de manière étanche au récipient (16) par l'intermédiaire d'une platine (24) de support de module (10) d'extraction, laquelle platine (24) de support comporte un passage (31) entre l'intérieur du corps (17, 18) du récipient (16) et l'intérieur (30) de la collerette (25).

## Claims

1. A module (10) for extracting samples, in the gaseous phase, of compounds present in a liquid for underground exploitation, the extraction module (10) comprising:
- a container (16) for said liquid associated with means (28,29,32,33,34) for agitating the liquid in the container (16) with a view to extracting gaseous phase compounds of the liquid, and,
connected to the container (16) when it is in gas extraction operation:
- at least one duct (9) for the inlet of the liquid into the container (16),
- at least one duct (37) for discharging the liquid of the container (16),
- at least one duct (50,43) for admitting an auxiliary gas into the container (16),
- at least one duct (11) for the outlet of auxiliary gas and gases extracted from the liquid, which is to be connected to a gas-receiving means (14), **characterised in that** the duct (50,43) for admitting auxiliary gas and the duct (37) for discharging liquid comprises at least one common section (51) for the passage of the liquid and the auxiliary gas, means (45-48) for preventing the passage of auxiliary gas being provided in the duct (37) for discharging liquid, downstream of said common section (51) in the direction in which the liquid passes.

2. An extraction module (10) according to claim 1, **characterised in that** the common section (51) communicates with the container (16) via a through-opening (40) for auxiliary gas and liquid, which comprises at least one edge (41) lying substantially in a plane in its lower part.

3. An extraction module (10) according to claim 2, **characterised in that** the through-opening (40) has a rectangular profile.

4. An extraction module (10) according to any one of the preceding claims, **characterised in that** the duct (50,43) for admitting auxiliary gas opens into the duct (37) for discharging liquid in a portion situated substantially sheltered from discharges of liquid coming from the container (16).

5. An extraction module (10) according to claim 4, **characterised in that** the agitating means (28,29,32,33,34) comprise a rotary agitator (32) and the duct (50,43) for admitting auxiliary gas opens into the duct (37) for discharging liquid in a portion (53) more upstream than downstream in the direction of rotation of the rotary agitator (32).

6. An extraction module (10) according to any one of the preceding claims, **characterised in that** the duct (50,43) for admitting auxiliary gas opens into the duct (37) for discharging liquid in a portion (53) situated at a distance from the container (16).

7. An extraction module (10) according to any one of the preceding claims, **characterised in that** the duct (37) for discharging liquid is inclined downwards in relation to the container (16).

8. An extraction module (10) according to any one of the preceding claims, **characterised in that** the duct (50,43) for admitting auxiliary gas has a section (53) for connection to the duct (37) for discharging liquid and an inlet section (54) for auxiliary gas, which is connected to the connecting section (53) and angled in relation to the latter in a direction having a component parallel to the direction in which the duct (37) for discharging liquid extends and in the vicinity of the connecting section (53), and the connecting section (53) opens into the duct (37) for discharging liquid through a section (55) which is widened in relation to that of the inlet section (54).

9. An extraction module (10) according to claim 8, **characterised in that** the inlet section (54) for auxiliary gas is directed, with respect to the inlet direction for the auxiliary gas, in the same direction as the discharge direction of the liquid in the duct (37) for discharging liquid in the vicinity of the connecting section (53).

10. An extraction module (10) according to any one of the preceding claims, **characterised in that** the duct (50) for admitting auxiliary gas forms an upper extension of a lower rectilinear duct section (43) forming the duct (37) for discharging liquid, the duct (50) for admitting auxiliary gas and the duct (37) for discharging liquid being adjacent to the container (16) and opening into the latter through a common through-opening (40), a liquid deflector (58) being provided above the through-opening (40) in the duct (50) for admitting auxiliary gas.

11. An extraction module (10) according to any one of the preceding claims, **characterised in that** the container (16), the duct (50,43) for admitting auxiliary gas, the duct (37) for discharging liquid and the duct (9) for the inlet of liquid are formed in one piece.

12. An extraction module (10) according to any one of the preceding claims, **characterised in that** the means (45-48) for preventing auxiliary gas from entering the duct (37) for discharging liquid downstream of the common section (51) in the direction in which the liquid passes comprise a siphon in the duct (37) for discharging liquid.

13. An extraction module (10) according to claim 12, **characterised in that** the siphon is formed under the portion (43) of the duct (37) for liquid connected to the container (16).

14. An extraction module (10) according to one of claims 12 and 13, **characterised in that** the duct (37) for discharging liquid comprises a passage (64c) to the outside, above the level of the siphon and downstream thereof in the direction in which the liquid passes.

15. An extraction module (10) according to any one of preceding claims, **characterised in that** the container (16) comprises a body (17,18) surmounted by a detachable collar (25) in which the duct (11) for the outlet of gas is provided.

16. An extraction module (10) according to claim 15, **characterised in that** the duct (11) for the outlet of gas opens into the inner part (30) of the collar (25) in contact with the interior of the body (17,18) of the container (16), thus forming an angle (66a) inclined towards the interior of the body (17,18) of the container (16).

17. An extraction module (10) according to one of claims 15 and 16, **characterised in that** the duct (11) for the outlet of gas comprises a first section (66) for connection to the collar (25), which is extended, on the gas outlet side, by a section (67) of smaller internal cross-section than that of the connecting section (66).

18. An installation for analysing gas samples, comprising an extraction module (10) according to any one of the preceding claims, wherein its duct (9) for the inlet of liquid is connected to a module (1) for sampling a liquid for underground exploitation and its duct (11) for the outlet of gas is connected to a module (14) for analysing gas samples.

19. An installation according to claim 18, **characterised in that** the duct (50,43) for admitting auxiliary gas is connected to the atmosphere, and the module (14) for analysing gas samples comprises gas suction means.

20. An installation according to claim 18, **characterised in that** the duct (50,43) for admitting auxiliary gas is connected to a supply of compressed auxiliary gas.

21. An installation according to any one of claims 18 to 20, **characterised in that** a liquid reheating module (6) is inserted into the liquid circuit between the liquid sampling module (1) and the extraction module (10) and external to the extraction module (10).

22. An installation according to any one of claims 18 to 21, **characterised in that** the duct (11) for the outlet of gas is connected to the module (14) for analysing gas samples via a water trapping module (69).

23. An installation according to claim 22, **characterised in that** the water trapping module (69) is provided with means for maintaining the temperature at a predetermined value.

24. An installation according to claim 22 or 23, **characterised in that** the analysing module (14) is connected to the water trapping module (69) via a gas duct (12) comprising a first section (70) connected to the water trapping module (69), which is extended, on the gas outlet side, by a second section (71) of smaller internal cross-section than that of the first connecting section (70).

25. An installation according to any one of claims 18 to 24, taken in combination with any one of claims 15 to 17, **characterised in that** the collar (25) is connected in a fluidtight manner to the container (16) via a support plate (24) for the extraction module (10), said support plate (24) comprising a passage (31) between the inside of the body (17,18) of the container (16) and the inside (30) of the collar (25).

## Patentansprüche

1. Modul (10) zum Extrahieren von Proben in der Gasphase von Verbindungen, die sich in einer Untergrund-Gewinnungs-Flüssigkeit befinden, wobei das Extraktionsmodul (10) aufweist:
- einen Behälter (16) für die Flüssigkeit, der mit Mitteln (28, 29, 32, 33, 34) zum Bewegen der Flüssigkeit in dem Behälter (16) im Hinblick auf das Extrahieren von Verbindungen in der Gasphase aus der Flüssigkeit assoziiert ist,
und wobei, wenn der Behälter (16) im Gas-Extraktions-Betrieb ist, folgende an diesen angeschlossen sind:
- mindestens eine Eingangsleitung (9) für die Flüssigkeit in den Behälter (16),
- mindestens eine Ablaufleitung (37) für die Flüssigkeit aus dem Behälter (16),
- mindestens eine Leitung (50, 43) für das Einlassen eines Hilfsgases in den Behälter (16), und
- mindestens eine Ausgangsleitung (11), die zum Anschließen an ein Gas-Aufnahme-Mittel (14) bestimmt ist, für das Hilfsgas und für die aus der Flüssigkeit extrahierten Gase, , **dadurch gekennzeichnet, dass** die Hilfsgas-Einlass-Leitung (50, 43) und die Flüssigkeits-Ablaufleitung (37) mindestens einen gemeinsamen Teilabschnitt (51) für das Passieren der Flüssigkeit und des Hilfsgases aufweisen, wobei Mittel (45 bis 48) zum Verhindern des Passierens des Hilfsgases in Durchlaufrichtung der Flüssigkeit stromabwärts von dem gemeinsamen Teilstück (51) auf der Flüssigkeits-Ablaufleitung (37) vorgesehen sind.

2. Extraktionsmodul (10) gemäß Anspruch 1, **dadurch gekennzeichnet, dass** das gemeinsame Teilstück (51) mittels eines Durchgangsfensters (40) für Hilfsgas und Flüssigkeit mit dem Behälter (16) kommuniziert, das mindestens einen Rand (41) aufweist, der im Wesentlichen in einer Ebene an seinem unteren Abschnitt angeordnet ist.

3. Extraktionsmodul (10) gemäß Anspruch 2, **dadurch gekennzeichnet, dass** das Durchgangsfenster (40) ein rechteckiges Profil aufweist.

4. Extraktionsmodul (10) gemäß einem der vorhergehenden Ansprüche, **dadurch gekennzeichnet, dass** die Hilfsgas-Einlassleitung (50, 43) in die Flüssigkeits-Ablaufleitung (37) an einem Abschnitt mündet, der im Wesentlichen geschützt vor den aus dem Behälter (16) kommenden Flüssigkeitsspritzern angeordnet ist.

5. Extraktionsmodul (10) gemäß Anspruch 4, **dadurch gekennzeichnet, dass** die Bewegungsmittel (28, 29, 32, 33, 34) einen Rotationsrührer (32) aufweisen und die Hilfsgas-Einlassleitung (50, 43) an einem Abschnitt (53) in die Flüssigkeits-Ablaufleitung (37) mündet, der in Rotationsrichtung des Rotationsrührers (32) eher stromaufwärts als stromabwärts angeordnet ist.

6. Extraktionsmodul (10) gemäß einem der vorhergehenden Ansprüche, **dadurch gekennzeichnet, dass** die Hilfsgas-Einlassleitung (50, 43) an einem Abschnitt (53) in die Flüssigkeits-Ablaufleitung (37) mündet, der sich im Abstand von dem Behälter (16) befindet.

7. Extraktionsmodul (10) gemäß einem der vorhergehenden Ansprüche, **dadurch gekennzeichnet, dass** die Flüssigkeits-Ablaufleitung (37) relativ zu dem Behälter (16) in Richtung nach unten geneigt ist.

8. Extraktionsmodul (10) gemäß einem der vorhergehenden Ansprüche, **dadurch gekennzeichnet, dass** die Hilfsgas-Einlassleitung (50, 43) einen Teilabschnitt (53) zum Anschließen an die Flüssigkeits-Ablaufleitung (37) und einen Teilabschnitt (54) für das Zuführen von Hilfsgas aufweist, der an den Anschluss-Teilabschnitt (53) angeschlossen ist und relativ zu diesem entlang einer Richtung gekrümmt ist, die eine Komponente parallel zu der Erstreckungsrichtung der Flüssigkeits-Ablaufleitung (37) in der Nähe des Anschluss-Teilabschnitts (53) aufweist, und dass der Anschluss-Teilabschnitt (53) durch einen relativ zu dem des Zuführ-Teilabschnitts (54) vergrößerten Abschnitt (55) in die Flüssigkeits-Ablaufleitung (37) mündet.

9. Extraktionsmodul (10) gemäß Anspruch 8, **dadurch gekennzeichnet, dass** der Hilfsgas-Zuführ-Teilabschnitt (54) in der Nähe des Anschluss-Teilabschnitts (53) in der Zuführrichtung des Hilfsgases in dieselbe Richtung gerichtet ist, wie die Ablaufrichtung der Flüssigkeit in der Flüssigkeits-Ablaufleitung (37).

10. Extraktionsmodul (10) gemäß einem der vorhergehenden Ansprüche, **dadurch gekennzeichnet, dass** die Hilfsgas-Einlassleitung (50) eine obere Verlängerung eines geradlinigen unteren Leitungs-Teilabschnitts (43) bildet, der die Flüssigkeits-Ablaufleitung (37) bildet, wobei die Hilfsgas-Einlassleitung (50) und die Flüssigkeits-Ablaufleitung (37) benachbart zu dem Behälter (16) sind und durch ein gemeinsames Durchgangsfenster (40) in diesen hinein münden, wobei ein Flüssigkeitsablenker (56) über dem Durchgangsfenster (40) in der Hilfsgas-Einlassleitung (50) vorgesehen ist.

11. Extraktionsmodul (10) gemäß einem der vorhergehenden Ansprüche, **dadurch gekennzeichnet dass** der Behälter (16), die Hilfsgas-Einlassleitung (50, 43), die Flüssigkeits-Ablaufleitung (37) und die Flüssigkeits-Einlassleitung (9) aus einem Stück sind.

12. Extraktionsmodul (10) gemäß einem der vorhergehenden Ansprüche, **dadurch gekennzeichnet, dass** die Mittel (45 bis 48) zum Verhindern des Passierens des Hilfsgases in die Flüssigkeits-Ablaufleitung (37) in Durchlaufrichtung der Flüssigkeit stromabwärts von dem gemeinsamen Teilstück (51) einen Siphon in der Flüssigkeits-Ablaufleitung (37) aufweisen.

13. Extraktionsmodul (10) gemäß Anspruch 12, **dadurch gekennzeichnet, dass** der Siphon unter dem Teil (43) der Flüssigkeitsleitung (37) realisiert ist, der an den Behälter (16) angeschlossen ist.

14. Extraktionsmodul (10) gemäß einem der Ansprüche 12 und 13, **dadurch gekennzeichnet, dass** die Flüssigkeits-Ablaufleitung (37) einen Durchgang (64c) nach außen über der Höhe des Siphons und in Durchlaufrichtung der Flüssigkeit stromabwärts von diesem aufweist.

15. Extraktionsmodul (10) gemäß einem der vorhergehenden Ansprüche, **dadurch gekennzeichnet, dass** der Behälter (16) einen Körper (17, 18) aufweist, der von einem unbeweglichen Kragen (25) überragt wird, auf dem die Gas-Ausgangsleitung (11) vorgesehen ist.

16. Extraktionsmodul (10) gemäß Anspruch 15, **dadurch gekennzeichnet, dass** die Gas-Ausgangsleitung (11) in den inneren Teil (30) des Kragens (25) in Kontakt mit dem Inneren des Körpers (17, 18) des Behälters (16) unter Ausbildung eines Winkels (66a) mündet, der in Richtung zu dem Inneren des Körpers (17, 18) des Behälters (16) geneigt ist.

17. Extraktionsmodul (10) gemäß einem der Ansprüche 15 und 16, **dadurch gekennzeichnet, dass** die Gas-Ausgangsleitung (11) einen ersten Teilabschnitt (66) zum Anschließen an den Kragen (25) aufweist, der auf der Gas-Ausgangsseite durch einen Teilabschnitt (67) mit einem Innenschnitt, der kleiner als der des Anschluss-Teilabschnitts (66) ist, verlängert ist.

18. Gas-Proben-Analyse-Einrichtung, aufweisend ein Extraktionsmodul (10) gemäß einem der vorhergehenden Ansprüche, dessen Flüssigkeits-Eingangsleitung (9) an ein Modul (1) zur Entnahme von Untergrund-Gewinnungs-Flüssigkeit angeschlossen ist, und dessen Gas-Ausgangs-Leitung an ein Modul (14) zur Analyse von Gasproben angeschlossen ist.

19. Einrichtung gemäß Anspruch 18, **dadurch gekennzeichnet, dass** die Hilfsgas-Einlassleitung (50, 43) zur Außenluft geführt ist, wobei das Gasproben-Analysemodul (14) Gas-Ansaugmittel aufweist.

20. Einrichtung gemäß Anspruch 18, **dadurch gekennzeichnet, dass** die Hilfsgas-Einlassleitung (50, 43) an eine Druck-Hilfsgasquelle angeschlossen ist.

21. Einrichtung gemäß einem der Ansprüche 18 bis 20, **dadurch gekennzeichnet, dass** ein Flüssigkeits-Erwärmungsmodul (6) in dem Flüssigkeitskreislauf zwischen dem Modul zur Flüssigkeitsentnahme (1) und dem Extraktionsmodul (10) außerhalb des Extraktionsmoduls (10) angeordnet ist.

22. Einrichtung gemäß einem der Ansprüche 18 bis 21, **dadurch gekennzeichnet, dass** die Gas-Ausgangsleitung (11) mittels eines Wasser-Fangmoduls (69) an das Gasproben-Analysemodul (14) angeschlossen ist.

23. Einrichtung gemäß Anspruch 22, **dadurch gekennzeichnet, dass** das Wasser-Fangmodul (69) mit Mitteln zum Halten der Temperatur auf einem vorbestimmten Wert ausgestattet ist.

24. Einrichtung gemäß Anspruch 22 oder 23, **dadurch gekennzeichnet, dass** das Analysemodul (14) mittels einer Gasleitung (12) an das Wasser-Fangmodul (69) angeschlossen ist, die einen ersten Teilabschnitt (70) zum Anschließen an das Wasser-Fangmodul (69) aufweist, der auf der Gas-Ausgangsseite durch einen zweiten Teilabschnitt (71) mit einem Innenschnitt, der kleiner als derjenige des ersten Anschluss-Teilabschnitts (70) ist, verlängert ist.

25. Einrichtung gemäß einem der Ansprüche 8 bis 24 in Kombination mit einem der Ansprüche 15 bis 17, **dadurch gekennzeichnet, dass** der Kragen (25) mittels einer Halteplatte (24) zum Abstützen des Extraktionsmoduls (10) auf dichte Weise an den Behälter (16) angeschlossen ist, wobei die Halteplatte (24) zum Abstützen einen Durchgang (31) zwischen dem Inneren des Körpers (17, 18) des Behälters (16) und dem Inneren (30) des Kragens (25) aufweist.
